(19) Europäisches Patentamt
European Patent Office
Office européen des brevets

(11) **EP 4 137 310 A1**

(12) **EUROPEAN PATENT APPLICATION**
published in accordance with Art. 153(4) EPC

(43) Date of publication:
**22.02.2023 Bulletin 2023/08**

(21) Application number: **21789090.4**

(22) Date of filing: **07.04.2021**

(51) International Patent Classification (IPC):
**B32B 9/00** (2006.01)     **B32B 27/36** (2006.01)
**B32B 27/40** (2006.01)     **B65D 65/40** (2006.01)

(52) Cooperative Patent Classification (CPC):
**B32B 9/00; B32B 27/36; B32B 27/40; B65D 65/40;**
Y02W 30/80

(86) International application number:
**PCT/JP2021/014776**

(87) International publication number:
**WO 2021/210466 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.04.2020 JP 2020071570**

(71) Applicant: TOYOBO CO., LTD.
**Osaka-shi**
**Osaka 5300001 (JP)**

(72) Inventors:
• **YAMAZAKI, Atsushi**
**Inuyama-shi, Aichi 484-8508 (JP)**
• **YAMAGUCHI, Yuya**
**Osaka-shi Osaka 530-8230 (JP)**

(74) Representative: **Vossius & Partner**
**Patentanwälte Rechtsanwälte mbB**
**Siebertstraße 3**
**81675 München (DE)**

(54) **LAMINATED LAYERED BODY**

(57)    An object of the present invention is to produce an environment-responsive laminated film including an inorganic thin film layer and a protective layer in this order on a substrate film layer using a polyester resin recycled from PET bottles. The laminated film is excellent in barrier properties and adhesiveness, and excellent in recyclability allowing the laminated film and a sealant layer to be easily peeled off from a laminated body. In order to solve the problem, the present invention has the following constitution.

A laminated body obtained by laminating a sealant layer on one surface of a laminated film including an inorganic thin film layer on one surface of a substrate film and a protective layer on the inorganic thin film layer, wherein the laminated body satisfies the following (a) to (d):

(a) the substrate film contains 10% by weight or less of a polyester resin recycled from PET bottles;

(b) the protective layer of the laminated film contains a urethane resin, and surface free energy of a surface of the protective layer is 45 to 60 mN/m;

(c) the laminated body has lamination strength of 1.5 N/15 mm or more, and lamination strength of 1.0 N/15 mm or less after being immersed in 1-methoxy-2-propanol at 40°C for 72 hours; and

(d) the laminated body has lamination strength of 1.5 N/15 mm or more after a boiling sterilization treatment at 90°C for 30 minutes.

EP 4 137 310 A1

**Description**

TECHNICAL FIELD

The present invention relates to a laminated film used in the packaging fields of foods, pharmaceuticals, and industrial products and the like. More specifically, the present invention relates to a laminated body which is obtained by laminating a sealant layer on a laminated film including an inorganic thin film layer and a protective layer in this order on a substrate film layer using a polyester resin recycled from PET bottles. The laminated film is excellent in barrier properties and adhesiveness, can be easily separated from the laminated body, and is excellent in recyclability.

BACKGROUND ART

In recent years, regulations for reducing the use of disposable plastics have been strengthened in various countries including Europe. In this background, there are growing international awareness of resource circulation and aggravated waste problems in emerging countries.
Therefore, for plastic packaging materials required for foods and pharmaceuticals and the like, environment-responsive products are required from the viewpoint of 3R (recycle, reuse, reduce).
Examples of performances required for the above-mentioned environmentally friendly packaging material include: the packaging material is made of a recycled material; the packaging material has gas barrier performance capable of blocking various gases and extending the best-before expiration date; and the packaging material has a material with a less environmental load (for example, no toxic organic solvent is used, and the amount of the material used itself is small).
A polyester resin recycled from PET bottles is known as a typical recycled material, and a technique is known, in which a polyester film for a covering label having less trouble due to static electricity is formed of a polyester resin derived from PET bottles having a small oligomer content without deteriorating productivity and quality (see, for example, Patent Document 1). As environmental regulations increase in the future, demand for such film applications is expected to increase.
On the other hand, in food applications requiring blocking of various gases such as water vapor and oxygen, a gas barrier laminated body in which a metal thin film made of aluminum or the like, and an inorganic thin film made of an inorganic oxide such as silicon oxide or aluminum oxide are formed on the surface of a substrate film made of plastic is generally used. Among them, a laminated body in which a thin film made of an inorganic oxide (inorganic thin film layer) such as silicon oxide, aluminum oxide, or a mixture thereof is formed does not require the use of aluminum foil and is transparent, whereby the contents thereof can be confirmed. Therefore, the laminated film is widely used.
For the gas barrier film composed of the recycled material and the inorganic thin film as described above, a laminated film exhibiting good gas barrier properties when formed as a gas barrier laminated film including an inorganic thin film layer and a sealant layer has been proposed. The laminated film contains a polyester resin recycled from PET bottles, and has low heat shrink properties and small thickness unevenness (for example, Patent Document 2). However, such a conventional technique has been insufficient for applications where higher barrier performance is required. Wet heat resistance performance and recyclability as a laminated body have not been discussed.
As means for maintaining barrier properties and adhesiveness even after the wet heat treatment, it has been reported that a coating layer composed of an oxazoline group-containing water-soluble polymer is provided between a substrate film and an inorganic thin film layer formed by, for example, a vapor-deposition method (see, for example, Patent Document 3). Furthermore, an attempt has been made to improve barrier performance by which a protective layer having gas barrier properties is further provided on the inorganic thin film. Suggested has been, for example, a method in which a water-soluble polymer, an inorganic lamellar compound, and a metal alkoxide or a hydrolyzate thereof are coated on an inorganic thin film to form a composite of an inorganic substance containing the inorganic lamellar compound and the water-soluble polymer on the inorganic thin film by a sol-gel method, and a laminated body in which an inorganic thin film is coated with a metaxylylene group-containing polyurethane (see, for example, Patent Document 4). By providing the coating layer, the inorganic thin film layer, and the protective layer as described above, a gas barrier film that maintains barrier properties and adhesiveness even after the wet heat treatment can be achieved.
However, when the gas barrier film is used as a packaging bag for a sterilization treatment in the wet heat treatment, heat resistance of a substrate itself, toughness (bag breakage resistance and pinhole resistance) depending on contents, and high sealing properties are simultaneously required in addition to barrier properties and adhesiveness, and thus the gas barrier film alone cannot satisfy all of these properties. Therefore, a constitution of two or more layers is generally obtained by dry-laminating a barrier polyester film on the outside of the bag, a polyamide film as an intermediate layer as necessary, and an olefin-based heat sealable resin on the inside (content side) using an adhesive. The laminated body having these different constitutions has high adhesiveness that can withstand use, which makes it difficult to peel and separate materials when the laminated body becomes waste after use. In this case, it is impossible to reuse the laminated body (material recycle) as plastic, and the laminated body is conventionally burned as thermal recycle for a waste treatment. However, due to growing awareness of environmental problems in recent years, it is desired to achieve a laminated body made of a single material, that is, a monomaterial constitution. For example, studies have been made in which an inorganic thin film layer is applied to a polyester-based sealant to develop barrier performance and sealability with one layer (see, for example, Patent Document 5). However, there is a problem that it is difficult for the current monomaterial constitution to satisfy all of the performances required for the sterilization bag.

PRIOR ART DOCUMENTS

PATENT DOCUMENT

Patent Document 1: JP-A-2012-91862
Patent Document 2: JP-B-6500629
Patent Document 3: JP-B-5560708
Patent Document 4: JP-B-4524463
Patent Document 5: WO 2019/187970

SUMMARY OF THE INVENTION

PROBLEMS TO BE SOLVED BY THE INVENTION

In Patent Document 2 described above, gas barrier properties and adhesiveness after a severe wet heat treatment have not been examined. In Patent Documents 3 and 4 described above, the recyclability of the laminated body after use has not been examined. In Patent Document 5 described above, gas barrier properties and adhesiveness after the wet heat treatment have not been examined.

The present invention has been made in view of the problems of the conventional techniques.

That is, an object of the present invention is to provide a laminated body obtained by laminating a sealant layer on an environment-responsive laminated film including an inorganic thin film layer and a protective layer in this order on a substrate film layer using a polyester resin recycled from PET bottles. The laminated body can easily separate the laminated film excellent in barrier properties and adhesiveness even after a severe wet heat treatment and also excellent in recyclability after use and disposal.

MEANS FOR SOLVING THE PROBLEMS

The present inventors have found that by using a polyester resin derived from PET bottles having a low environmental load as a substrate and forming a structure including a specific barrier protective layer excellent in flexibility and adhesiveness with respect to an inorganic thin film layer, gas barrier performance before a treatment can be improved, and the barrier properties and the adhesiveness can be maintained even after a severe wet heat treatment. Furthermore, the present inventors have found that the laminated film can be easily peeled off from the laminated body by utilizing the dissolution properties of the protective layer when the laminated body is immersed in a specific solvent, and have completed the present invention.

That is, the present invention comprises the following components.

(1) A laminated body obtained by laminating a sealant layer on one surface of a laminated film including an inorganic thin film layer on one surface of a substrate film and a protective layer on the inorganic thin film layer, wherein the laminated body satisfies the following (a) to (d) :

(a) the substrate film contains 10% by weight or less of a polyester resin recycled from PET bottles;
(b) the protective layer of the laminated film contains a urethane resin, and surface free energy of a surface of the protective layer is 45 to 60 mN/m;
(c) the laminated body has lamination strength of 1.5 N/15 mm or more, and lamination strength of 1.0 N/15 mm or less after being immersed in 1-methoxy-2-propanol at 40°C for 72 hours; and
(d) the laminated body has lamination strength of 1.5 N/15 mm or more after a boiling sterilization treatment at 90°C for 30 minutes.

(2) The laminated body according to (1), wherein the urethane resin contained in the protective layer contains an aromatic component or an aromatic-aliphatic component as a constituent component.

(3) The laminated body according to (1) or (2), further comprising a coating layer between the substrate film layer and the inorganic thin film layer,
wherein the coating layer contains a resin having an oxazoline group or a carbodiimide group as a constituent component.

(4) The laminated body according to any one of (1) to (3), wherein the inorganic thin film layer is an aluminum oxide layer or a layer of a composite oxide of silicon oxide and aluminum oxide.

EFFECT OF THE INVENTION

The present invention makes it possible to provide a laminated body which is excellent in barrier properties and adhesiveness even after a severe wet heat treatment while using a recycled material, and which can easily separate a laminated film capable of being easily peeled off from the laminated body and is excellent in recyclability.

MODE FOR CARRYING OUT THE INVENTION

The following is a detailed description of the present invention.

[Substrate Film Layer]

In the present invention, as described later, a recycled polyester resin regenerated from PET bottles containing an isophthalic acid component as an acid component is preferably used as a raw material for a substrate film. Therefore, the substrate film is composed of a mixed resin of a recycled polyester resin and a virgin raw material, that is, an unrecycled resin, and the intrinsic viscosity of the resin constituting the film means a value obtained by measuring the intrinsic viscosity of the mixed resin constituting the film. The lower limit of the intrinsic viscosity of the resin constituting the film obtained by measuring the substrate film is preferably 0.58 dl/g, and more preferably 0.60 dl/g. When the intrinsic viscosity is less than 0.58 dl/g, the intrinsic viscosity of the recycled resin composed of PET bottles often exceeds 0.68 dl/g, and when the viscosity is reduced at the time of producing a film using the recycled resin, poor thickness unevenness may occur, which is not preferable. The film may be colored, which is not preferable. The upper limit is preferably 0.70 dl/g, and more preferably 0.68 dl/g. When the intrinsic viscosity exceeds 0.70 dl/g, the resin is less likely to be discharged from an extruder, whereby the productivity may be lowered, which is not preferable.
The lower limit of the thickness of the substrate film is preferably 8 $\mu$m, more preferably 10 $\mu$m, and still more preferably 12 $\mu$m. If the thickness is less than 8 $\mu$m, the strength of the film may be insufficient, which is not preferable. The upper limit is preferably 200 $\mu$m, more preferably 50 $\mu$m, and still more preferably 30 $\mu$m. If the thickness exceeds 200 $\mu$m, the film becomes too thick, which may cause difficult processing. It is not preferable that the thickness of the film increases from the viewpoint of an environmental load, and it is preferable to reduce the volume as much as possible.
The lower limit of the refractive index of the substrate film in the thickness direction is preferably 1.4930, and more preferably 1.4940. If the refractive index is less than 1.4930, orientation is not sufficient, and therefore a lamination strength may not be obtained. The upper limit is preferably 1.4995 and more preferably 1.4980. If the refractive index exceeds 1.4995, the orientation of the plane may collapse to cause insufficient mechanical characteristics, which is not preferable.
The lower limit of the heat shrinkage rate of the substrate film treated at 150°C for 30 minutes in the machine direction (sometimes referred to as MD) and the transverse direction (sometimes referred to as TD) is preferably 0.1%, and more preferably 0.3%. If the heat shrinkage rate is less than 0.1%, the improvement effect may be saturated, and the film may be mechanically brittle, which is not preferable. The upper limit is preferably 3.0%, and more preferably 2.5%. If the heat shrinkage rate exceeds 3.0%, pitch deviation and the like may occur due to dimensional change during processing such as printing, which is not preferable. If the heat shrinkage rate exceeds 3.0%, shrinkage and the like in the transverse direction may occur due to dimensional change during processing such as printing, which is not preferable.
A recycled polyester resin derived from PET bottles containing an isophthalic acid component as an acid component is preferably used as a raw material for a substrate film. The crystallinity of a polyester used for PET bottles is controlled in order to improve the bottle appearance, and as a result, a polyester containing 10 mol% or less of an isophthalic acid component may be used. The contained isophthalic acid causes the crystal structure of the polyester to collapse, which contributes to the flexibility of the substrate. By controlling the flexibility, a surface on which an inorganic thin film is easily laminated can be provided.
The lower limit of the amount of a terephthalic acid component in all dicarboxylic acid components constituting the polyester resin contained in the substrate film is preferably 95.0 mol%, more preferably 96.0 mol%, still more preferably 96.5 mol%, and particularly preferably 97.0 mol%. If the amount is less than 95.0 mol%, crystallinity is deteriorated, whereby the heat shrinkage rate may increase, which is not so preferable. The upper limit of the amount of the terephthalic acid component in the polyester resin contained in the film is preferably 99.5 mol%, and more preferably 99.0 mol%.

Many of the recycled polyester resins derived from PET bottles contain dicarboxylic acid components typified by isophthalic acid besides terephthalic acid, whereby the amount of the terephthalic acid component constituting the polyester resin in the film exceeding 99.5 mol% consequently makes it difficult to produce a polyester film containing a recycled resin at a high rate, which is not so preferable.

In the present invention, it is important to control the amount of an isophthalic acid component relative to a total dicarboxylic acid component constituting the polyester resin contained in the substrate film for imparting flexibility for exhibiting barrier performance. The lower limit is preferably 0.5 mol%, more preferably 0.7 mol%, still more preferably 0.9 mol%, and particularly preferably 1.0 mol%. Recycled polyester resins derived from PET bottles contain a large amount of an isophthalic acid component, whereby the amount of the isophthalic acid component constituting the polyester resin in the film of less than 0.5 mol% consequently makes it difficult to produce a polyester film containing a recycled resin at a high rate, which is not so preferable. The flexibility of the surface is reduced, and the inorganic thin film layer is apt to be subjected to a stress load when the inorganic thin film layer is laminated, whereby the barrier performance may be deteriorated. The upper limit of the amount of the isophthalic acid component in all the dicarboxylic acid components constituting the polyester resin contained in the film is preferably 5.0 mol%, more preferably 4.0 mol%, still more preferably 3.5 mol%, and particularly preferably 3.0 mol%. If the amount exceeds 5.0 mol%, crystallinity is deteriorated, whereby the heat shrinkage rate may increase, which is not so preferable. When the substrate becomes too soft, the inorganic thin film cannot follow the change, whereby the barrier performance may be deteriorated. By setting the content rate of the isophthalic acid component within the above range, a surface on which the inorganic thin film layer is easily deposited is obtained due to the softening effect of the substrate surface, and as a result, good barrier properties can be exhibited.

The upper limit of the intrinsic viscosity of the recycled resin derived from PET bottles is preferably 0.90 dl/g, more preferably 0.80 dl/g, still more preferably 0.77 dl/g, and particularly preferably 0.75 dl/g. If the intrinsic viscosity exceeds 0.9 dl/g, the resin is less likely to be discharged from an extruder, whereby the productivity may be lowered, which is not so preferable.

The lower limit of the content rate of the polyester resin recycled from PET bottles in the film is 10% by weight, preferably 50% by weight, more preferably 65% by weight, and still more preferably 75% by weight. If the content rate is less than 10% by weight, the content rate is low for utilization of the recycled resin, which is not so preferable in terms of contribution to environmental protection. The amount of the isophthalic acid component is reduced, whereby the lamination of the inorganic thin film layer may be unable to exhibit superior flexibility. Meanwhile, the upper limit of the content rate of the polyester resin recycled from PET bottles is not limited, but preferably 95% by weight, more preferably 90% by weight, still more preferably 85% by weight. If the content rate exceeds 95% by weight, it is sometimes impossible to sufficiently add a lubricant or an additive such as inorganic particles for improving the function as a film, which is not so preferable. A polyester resin recycled from PET bottles may be used as a master batch (a resin contained in a high concentration) used when a lubricant or an additive such as inorganic particles is added for improving the function as a film.

As the kind of the lubricant, inorganic lubricants such as silica, calcium carbonate, and alumina, and also organic lubricants are preferable, and silica and calcium carbonate are more preferable. By these lubricants, transparency and slippage can be exhibited. The average particle diameter of the particles to be the lubricant is preferably within a range of 0.05 to 3.0 $\mu$m as measured by the Coulter counter.

The lower limit of the lubricant content rate in the substrate film is preferably 0.01% by weight, more preferably 0.015% by weight, and still more preferably 0.02% by weight. If the content rate is less than 0.01% by weight, the slippage may be deteriorated. The upper limit of the lubricant content rate is preferably 1% by weight, more preferably 0.2% by weight, and still more preferably 0.1% by weight. If the lubricant content rate exceeds 1% by weight, transparency may be deteriorated, which is not so preferable.

A method for producing the substrate film used in the laminated film of the present invention is not particularly limited, but for example, the following production method is recommended. It is important to set a temperature for melting and extruding a resin in an extruder. The basic idea is that (1) deterioration is suppressed by extrusion at a temperature as low as possible, since a polyester resin used for PET bottles contains an isophthalic acid component, and (2) the polyester resin has a portion that melts at a high temperature or a high pressure or the like in order to sufficiently and uniformly melt an intrinsic viscosity or a fine highly crystalline portion. Addition of the isophthalic acid component leads to deterioration in the tacticity of a polyester and a decrease in the melting point. Therefore, extrusion at a high temperature results in a significant decrease in melt viscosity or deterioration by heat, and also in a decrease in the mechanical strength and an increase in foreign matters resulting from the deterioration. Sufficient melt-kneading is impossible merely by lowering the extrusion temperature, which may result in problems of an increase in thickness unevenness and foreign matters such as fish eyes. From the above, examples of a recommended production method include a method of using two extruders in tandem, a method of increasing the pressure in a filter part, or a method of using a screw having a high shear force for a part of a screw constitution.

The lower limit of the set temperature of the resin melting part in the extruder (excluding the maximum set temperature of the compression part of the screw in the extruder) is preferably 270°C, and the upper limit thereof is preferably 290°C. If the set temperature is lower than 270°C, extrusion is difficult, and if the temperature exceeds 290°C, the resin may be deteriorated, which is not so preferable.

The lower limit of the highest set temperature in the compression part of the screw in the extruder is preferably 295°C. In a polyester resin used for PET bottles, crystals having a high melting point (260°C to 290°C) often exist in terms of transparency. An additive and a crystallization nucleating agent and the like are added, and unevenness in the fine melting behavior is observed in the resin material. If the highest set temperature is lower than 295°C, it is difficult to sufficiently melt them, which is not so preferable. The upper limit of the highest set temperature in the compression part of the screw in the extruder is preferably 310°C. If the highest set temperature exceeds 310°C, the resin may be deteriorated, which is not so preferable.

The lower limit of the time for the resin to pass the region at the highest set temperature in the compression part of the screw in the extruder is preferably 10 seconds, and more preferably 15 seconds. If the time is shorter than 10 seconds, the polyester resin used for PET bottles cannot be sufficiently melted, which is not so preferable. The upper limit of the time is preferably 60 seconds, and more preferably 50 seconds. If the time exceeds 60 seconds, the resin is apt to be deteriorated, which is not so preferable. By setting the extruder in such ranges, a film reduced in thickness unevenness, foreign matters such as fish eyes, and coloration can be obtained even if a large amount of a polyester resin recycled from PET bottles is used.

The resin melted in this manner is extruded in a sheet-like form on a cooling roll, and then biaxially stretched. The stretching method may be a simultaneous biaxial stretching method, but a sequential biaxial stretching method is particularly preferable. These make it easy to satisfy productivity and quality required in the present invention.

A method for stretching the film in the present invention is not particularly limited, but the following points are important. In order to stretch a resin having an intrinsic viscosity of 0.58 dl/g or more and containing an isophthalic acid component, ratios and temperatures in the machine direction (MD) stretching and transverse direction (TD) stretching are important. If the MD stretch ratio and the temperature are not appropriate, a stretching force is not uniformly applied, and the orientation of molecules is insufficient, which may result in an increase in thickness unevenness or insufficient mechanical characteristics. The film may be broken in the next TD stretching step, or thickness unevenness may be extremely increased. If the TD stretch ratio and the temperature are not appropriate, the film may not be uniformly stretched; balance of the vertical and transverse orientation may be deteriorated; and the mechanical characteristics may be insufficient. When the next heat setting step is performed in the state that the thickness unevenness is significant or the molecular chain orientation is insufficient, relaxation cannot be uniformly performed, which causes problems of more significant thickness unevenness and insufficient mechanical characteristics. Therefore, it is basically recommended that in the MD stretching, stretching is performed step by step by performing temperature adjustment described below, and in the TD stretching, stretching is performed at an appropriate temperature so that the orientation balance is not extremely deteriorated. The present invention is not limited to the following aspects, but will be described with an example.

A machine direction (MD) stretching method is preferably a roll stretching method or an IR heating method.

The lower limit of the MD stretching temperature is preferably 100°C, more preferably 110°C, and still more preferably 120°C. Even if the MD stretching temperature is lower than 100°C, and a polyester resin with an intrinsic viscosity of 0.58 dl/g or more is stretched to orient molecules in the machine direction, the film is broken in the next transverse stretching step or an extreme thickness defect is caused, which is not preferable. The upper limit of the MD stretching temperature is preferably 140°C, more preferably 135°C, and still more preferably 130°C. If the MD stretching temperature exceeds 140°C, the orientation of molecular chains becomes insufficient, whereby mechanical characteristics may become insufficient, which is not so preferable.

The lower limit of the MD stretch ratio is preferably 2.5 times, more preferably 3.5 times, and still more preferably 4 times. Even if the MD stretch ratio is less than 2.5 times, and a polyester resin having an intrinsic viscosity of 0.58 dl/g or more is stretched to orient molecules in the machine direction, the film may be broken in the next transverse stretching step or an extreme thickness defect may be caused, which is not so preferable. The upper limit of the MD stretch ratio is preferably 5 times, more preferably 4.8 times, and still more preferably 4.5 times. If the MD stretch ratio exceeds 5 times, the effect of improving a mechanical strength and thickness unevenness may be saturated, which is not so meaningful.

The MD stretching method may be the above-mentioned one-stage stretching, but the film is preferably stretched in two or more stages. Stretching in two or more stages makes it possible to well stretch a polyester resin having a high intrinsic viscosity and derived from a recycled resin containing isophthalic acid, which provides reduced thickness unevenness, and an improved lamination strength and mechanical characteristics.

The lower limit of the MD stretching temperature in the first stage is preferably 110°C, and more preferably 115°C. If the MD stretching temperature is lower than 110°C, heat is insufficient, whereby vertical stretching cannot be sufficiently performed, resulting in poor flatness, which is not preferable. The upper limit of the MD stretching temperature in the first stage is preferably 125°C, and more preferably 120°C. If the MD stretching temperature exceeds 125°C, the orientation of molecular chains may become insufficient and mechanical characteristics may be deteriorated, which is not so preferable.

The lower limit of the MD stretch ratio in the first stage is preferably 1.1 times, and more preferably 1.3 times. If the MD stretch ratio is 1.1 times or more, finally, a polyester resin having an intrinsic viscosity of 0.58 dl/g or more can be sufficiently stretched in the machine direction by weak stretching in the first stage, and accordingly, the productivity can be improved. The upper limit of the MD stretch ratio in the first stage is preferably 2 times, and more preferably 1.6 times. If the MD stretch ratio exceeds 2 times, the orientation of molecular chains in the machine direction is too high, whereby the stretching may become difficult in the second stage or thereafter and the film may have significant thickness unevenness, which is not so preferable.

The lower limit of the MD stretching temperature in the second stage (or final stage) is preferably 110°C, and more preferably 115°C. If the MD stretching temperature is 110°C or higher, a polyester resin having an intrinsic viscosity of 0.58 or more can be sufficiently stretched in the machine direction and can be stretched in the transverse direction in the next step, so that the thickness unevenness in the vertical and transverse directions can be reduced. The upper limit of the MD stretching temperature is preferably 130°C, and more preferably 125°C. If the MD stretching temperature exceeds 130°C, crystallization is promoted, whereby the transverse stretching may become difficult or the thickness unevenness may become significant, which is not so preferable.

The lower limit of the MD stretch ratio in the second stage (or final stage) is preferably 2.1 times, and more preferably 2.5 times. Even if the MD stretch ratio is less than 2.1 times, and a polyester resin having an intrinsic viscosity of 0.58 or more is stretched to orient molecules in the machine direction, the film may be broken in the next transverse stretching step or an extreme thickness defect may be caused, which is not so preferable. The upper limit of the MD stretch ratio is preferably 3.5 times, and more preferably 3.1 times. If the MD stretch ratio exceeds 3.5 times, the orientation in the machine direction is too high, whereby the stretching may be impossible in the second stage or thereafter and the film may have significant thickness unevenness, which is not so preferable.

The lower limit of the TD stretching temperature is preferably 110°C, more preferably 120°C, and still more preferably 125°C. If the TD stretching temperature is lower than 110°C, the stretching stress in the transverse direction is increased, whereby the film may be broken or the thickness unevenness may become extremely significant, which is not so preferable. The upper limit of the TD stretching temperature is preferably 150°C, more preferably 145°C, and still more preferably 140°C. If the TD stretching temperature exceeds 150°C, the orientation of molecular chains does not increase, whereby mechanical characteristics may be deteriorated, which is not so preferable.

The lower limit of the transverse direction (TD) stretch ratio is preferably 3.5 times, and more preferably 3.9 times. If the stretch ratio is less than 3.5 times, molecular orientation is weak, whereby a mechanical strength may become insufficient, which is not so preferable. The orientation of molecular chains in the machine direction is significant and the balance between the vertical and transverse directions is deteriorated to make the thickness unevenness significant, which is not so preferable. The upper limit of the TD stretch ratio is preferably 5.5 times, and more preferably 4.5 times. If the TD stretch ratio exceeds 5.5 times, the film may be broken, which is not so preferable.

In order to obtain the substrate film used for the laminated film of the present invention, it is desirable to appropriately set conditions for heat setting continuously performed in a tenter after the completion of the TD stretching and for the subsequent cooling of the film to room temperature. As compared with a common polyethylene terephthalate film containing no isophthalic acid, a polyester film containing a recycled resin derived from PET bottles and containing isophthalic acid has low crystallinity, is apt to be melted in an ultra-fine level, and has a poor mechanical strength. Therefore, when the polyester film is exposed to high temperatures under strain abruptly after completion of stretching, or when the polyester film is abruptly cooled under strain after completion of heat setting at high temperatures, a tensile force balance in the transverse direction is disordered due to an inevitable temperature difference in a film transverse direction, which results in thickness unevenness and defective mechanical characteristics. Meanwhile, when the heat setting temperature is lowered to deal with the phenomenon, a sufficient lamination strength may not be obtained. In the present invention, it is recommended to perform steps of heat setting 1 at a slightly low temperature, heat setting 2 (as necessary, heat setting 3) at a sufficiently high temperature, and thereafter, gradual cooling to lower the temperature to room temperature after the completion of stretching. However, the present invention is not limited to this method, and other recommended methods include a method of controlling the film tension correspondingly to the velocity of hot air in the tenter and the temperatures in the respective zones; a method of performing heat treatment at a relatively low temperature in a furnace with a sufficient length after the completion of stretching; and a method of relaxing the film by heat rolls after the completion of the heat setting.

As one example, a method by controlling the tenter temperature will be described. Heat settings 1, 2, and 3 are arranged in order from the upstream side in the film machine direction of a heat setting zone in the tenter.

The lower limit of the temperature in the heat setting 1 is preferably 160°C, and more preferably 170°C. If the temperature is lower than 160°C, the heat shrinkage rate finally increases, and deviation and shrinkage may be caused at the time of processing, which is not so preferable. The upper limit of the temperature is preferably 215°C, and more preferably 210°C. If the temperature exceeds 215°C, the film is abruptly exposed to a high temperature, whereby the thickness unevenness may become significant or the film may be broken, which is not so preferable.

The lower limit of the time for the heat setting 1 is preferably 0.5 seconds, and more preferably 2 seconds. If the time is shorter than 0.5 sec, the film temperature increase may be insufficient. The upper limit of the time is preferably 10 seconds, and more preferably 8 seconds. If the time exceeds 10 seconds, productivity may be deteriorated, which is not so preferable.

The lower limit of the temperature in the heat setting 2 is preferably 220°C, and more preferably 227°C. If the temperature is lower than 220°C, the heat shrinkage rate may become significant, whereby deviation and shrinkage may be caused at the time of processing, which is not so preferable. The upper limit of the temperature is preferably 240°C, and more preferably 237°C. If the temperature exceeds 240°C, the film may be melted, or even if not melted, the film may be fragile, which is not so preferable.

The lower limit of the time for the heat setting 2 is preferably 0.5 seconds, and more preferably 3 seconds. If the time is shorter than 0.5 seconds, the film may be apt to be broken at the time of heat setting, which is not so preferable. The upper limit of the time is preferably 10 seconds, and more preferably 8 seconds. If the upper limit of the time exceeds 10 seconds. sagging may occur to result in thickness unevenness, which is not so preferable.

The lower limit of the temperature in the case where the heat setting 3 is performed as necessary is preferably 205°C, and more preferably 220°C. If the temperature is lower than 205°C, the heat shrinkage rate may become significant, and deviation whereby shrinkage may be caused at the time of processing, which is not so preferable. The upper limit of the temperature is preferably 240°C, and more preferably 237°C. If the temperature exceeds 240°C, the film may be melted, or even if not melted, the film may be fragile, which is not so preferable.

The lower limit of the time in the case where the heat setting 3 is performed as necessary is preferably 0.5 seconds, and more preferably 3 seconds. If the time is shorter than 0.5 seconds, the film may be apt to be broken at the time of heat setting, which is not so preferable. The upper limit of the time is preferably 10 seconds, and more preferably 8 seconds. If the time exceeds 10 seconds, sagging may occur to cause thickness unevenness, which is not so preferable.

TD relaxation may be carried out at any point in the heat setting. The lower limit thereof is preferably 0.5%, and more preferably 3%. If the lower limit is less than 0.5%, the heat shrinkage rate particularly in the transverse direction becomes significant, whereby deviation and shrinkage may be caused at the time of processing, which is not so preferable. The upper limit thereof is preferably 10%, and more preferably 8%. If the upper limit exceeds 10%, sagging may occur to cause thickness unevenness, which is not so preferable.

The lower limit of the gradual cooling temperature after the TD heat setting is preferably 90°C, and more preferably 100°C. If the gradual cooling temperature is lower than 90°C, the film contains isophthalic acid, whereby the thickness unevenness may become significant because of shrinkage by abrupt temperature change or the film may be broken, which is not so preferable. The upper limit of the gradual cooling temperature is preferably 150°C, and more preferably 140°C. If the gradual cooling temperature exceeds 150°C, a sufficient cooling effect may not be obtained, which is not so preferable.

The lower limit of the gradual cooling time after the heat setting is preferably 2 seconds, and more preferably 4 seconds. If the gradual cooling time is shorter than 2 seconds, a sufficient gradual cooling effect may not be obtained, which is not so preferable. The upper limit thereof is preferably 20 seconds, and more preferably 15 seconds. The gradual cooling time exceeding 20 seconds is apt to be disadvantageous in terms of productivity, which is not so preferable.

The upper limit of the haze per thickness of the substrate film layer in the present invention is preferably 0.66%/$\mu$m, more preferably 0.60%/$\mu$m, and still more preferably 0.53%/$\mu$m. When the substrate film layer having a haze of 0.66%/$\mu$m or less is subjected to printing, the quality of printed characters and images is improved.

The substrate film layer in the present invention may be subjected to corona discharge treatment, glow discharge treatment, flame treatment, or surface roughening treatment, as long as the object of the present invention is not impaired, and may be subjected to known anchor coating treatment, printing, or decoration or the like.

A layer made of another material may be laminated on the substrate film layer in the present invention. As the method, the layer may be laminated on the substrate film layer after or during the production of the substrate film layer.

[Inorganic Thin Film Layer]

In the laminated film having gas barrier properties of the present invention, an inorganic thin film layer is provided on the surface of the substrate film. The inorganic thin film layer is a thin film made of a metal or an inorganic oxide. The material for forming the inorganic thin film layer is not particularly limited as long as the material can be made into a thin film, but from the viewpoint of gas barrier properties, inorganic oxides such as silicon oxide (silica), aluminum oxide (alumina), and mixtures of silicon oxide and aluminum oxide are preferable. In this composite oxide, silicon oxide and aluminum oxide are preferably mixed at such a mixing ratio that the concentration of Al is within a range of 20 to 70% by mass in terms of metal content by mass. If the concentration of Al is less than 20% by mass, the barrier properties against water vapor may be deteriorated. Meanwhile, If the concentration of Al exceeds 70% by mass, the inorganic thin film layer tends to be harder, whereby the film may be broken during secondary processing such as printing or lamination to cause deteriorated gas barrier properties. When the Al concentration is 100% by mass, the water vapor barrier performance is good, but the inorganic thin film layer is made of a single material, whereby the surface of the inorganic thin film layer tends to be smooth. The inorganic thin film layer has poor slipperiness, whereby defects (wrinkles and acnes and the like) in processing are apt to occur. The silicon oxide as used herein is various silicon oxides such as SiO and $SiO_2$, or a mixture thereof, and the aluminum oxide as used herein is various aluminum oxides such as AlO and $Al_2O_3$, or a mixture thereof.

The film thickness of the inorganic thin film layer is normally 1 to 100 nm, and preferably 5 to 50 nm. If the film thickness of the inorganic thin film layer is less than 1 nm, satisfactory gas barrier properties may be less likely to be obtained. Meanwhile, even if the film thickness exceeds 100 nm such that the inorganic thin film layer is excessively thickened, the gas barrier properties-improving effect equivalent to such increase in the thickness cannot be obtained, and such a film thickness is rather disadvantageous in terms of flex resistance and production cost.

The method for forming the inorganic thin film layer is not particularly limited, and known vapor-deposition methods, for example, physical vapor-deposition methods (PVD methods) such as a vacuum vapor-deposition method, a sputtering method, and an ion plating method, or chemical vapor-deposition methods (CVD methods) may be adopted as appropriate. Hereinafter, a typical method for forming the inorganic thin film layer will be described by taking a silicon oxide-aluminum oxide based thin film as an example. For example, in the ease of adopting a vacuum vapor-deposition method, a mixture of $SiO_2$ and $Al_2O_3$, or a mixture of SiOz and Al, or the like is preferably used as a vapor-deposition raw material. Normally, particles are used as these vapor-deposition raw materials. In this case, the size of each particle is desirably a size that does not change the pressure during vapor-deposition, and a preferable particle size is 1 mm to 5 mm. For heating, systems such as resistive heating, high frequency induction heating, electron beam heating, and laser heating can be adopted. It is also possible to adopt reactive vapor-deposition in which oxygen, nitrogen, hydrogen, argon, carbon dioxide gas, or water vapor or the like is introduced as a reaction gas or a means such as ozone addition or ion assist is used. Furthermore, film production conditions such as applying a bias to a body to be vapor-deposited (laminated film to be vapor-deposited) and heating or cooling the body to be vapor-deposited can also be optionally changed. Similarly, the vapor-deposition materials, the reaction gases, the application of a bias to the body to be vapor-deposited, and the heating/cooling and the like can be changed even when a sputtering method or a CVD method is adopted.

[Coating layer]

In the laminated film of the present invention, a coating layer can be provided between the substrate film layer and the inorganic thin film layer for the purpose of securing gas barrier properties and lamination strength after retorting. Examples of the resin composition used for the coating layer provided between the substrate film layer and the inorganic thin film layer include compositions obtained by adding epoxy-based, isocyanate-based, melamine-based, oxazoline-based, and carbodiimide-based curing agents and the like to urethane-based, polyester-based, acryl-based, titanium-based, isocyanate-based, imine-based, and polybutadiene-based resins and the like. These resin compositions used for the coating layer preferably contain a silane coupling agent having at least one or more organic functional groups. The organic functional groups include alkoxy groups, amino groups, epoxy groups, isocyanate groups, etc. By the addition of the silane coupling agent, the lamination strength after retorting is further improved.

Among the resin compositions used for the coating layer, it is preferable to use a resin containing an oxazoline group or a carbodiimide group, and it is more preferable to use a mixture of an acrylic resin and a urethane-based resin in addition to these resins. These functional groups have high affinity with the inorganic thin film, and can react with a metal hydroxide and an oxygen deficiency portion of an inorganic oxide that is generated during formation of the inorganic thin film layer, whereby firm adhesion to the inorganic thin film layer is exhibited. An unreacted functional group present in a coating layer can react with a carboxylic acid terminal that is generated by hydrolysis of the substrate film layer and the coating layer, thereby forming crosslinks.

In the present invention, the adhesion amount of the coating layer is preferably 0.010 to 0.200 ($g/m^2$). This makes it possible to uniformly control the coating layer, and as a result, the inorganic thin film layer can be densely deposited. The cohesive force inside the coating layer is improved, and the adhesion between the respective layers of the substrate film-coating layer -inorganic thin film layer is also improved, whereby the water-resistant adhesiveness of the coating layer can be improved. The adhesion amount of the coating layer is preferably 0.015 ($g/m^2$) or more, more preferably 0.020 ($g/m^2$) or more, and still more preferably 0.025 ($g/m^2$) or more, and preferably 0.190 ($g/m^2$) or less, more preferably 0.180 ($g/m^2$) or less, and still more preferably 0.170 ($g/m^2$) or less. If the adhesion amount of the coating layer exceeds 0.200 ($g/m^2$), the cohesive force inside the coating layer becomes insufficient, whereby good adhesion may not be exhibited. Since the uniformity of the coating layer is also deteriorated, defects occur in the inorganic thin film layer, whereby the gas barrier properties may be deteriorated. Furthermore, when the coating layer is thick, the softening effect of the substrate is weakened, leading to deterioration in gas barrier properties. Moreover, the production cost increases, which is economically disadvantageous. Meanwhile, if the film thickness of the coating layer is less than

0.010 (g/m$^2$), the substrate cannot be sufficiently coated, whereby sufficient gas barrier properties and interlayer adhesion may not be obtained.

The method for forming the coating layer is not particularly limited, and, for example, conventionally known methods such as coating methods can be adopted. Examples of suitable methods among the coating methods include an off-line coating method and an in-line coating method. For example, in the case of an in-line coating method that is performed in a step of producing a substrate film layer, as conditions for drying and a heat treatment during coating, although depending on a coating thickness or conditions of an apparatus, it is preferable to send the substrate film to a stretching step in a perpendicular direction immediately after coating and to perform drying in a pre-heating zone or a stretching zone in the stretching step. In such a case, normally, the temperature is preferably set to about 50 to 250°C.

Examples of the solvent (solvating medium) used when the coating method is used include aromatic solvents such as benzene and toluene; alcohol-based solvents such as methanol and ethanol; ketone-based solvents such as acetone and methyl ethyl ketone; ester-based solvents such as ethyl acetate and butyl acetate; and polyhydric alcohol derivatives such as ethylene glycol monomethyl ether.

[Protective layer]

In the present invention, a protective layer is provided on the inorganic thin film layer. The metal oxide layer is not a completely dense film, but has minute deficient portions dotted therein. By applying a specific resin composition for a protective layer described later onto the metal oxide layer to form a protective layer, a resin contained in the resin composition for a protective layer permeates the deficient portions of the metal oxide layer, which accordingly provides an effect of stabilizing the gas barrier properties. In addition, by using a material having gas barrier properties also for the protective layer itself, the gas barrier performance of the laminated film may also be significantly improved. Furthermore, in the present invention, the present inventors have found that the laminated body after use can be easily separated by utilizing the fact that the protective layer is likely to swell in a specific solvent.

As a resin composition to be used for the protective layer formed on the surface of the inorganic thin film layer of the laminated film of the present invention, a resin having a urethane skeleton is used. The urethane resin is preferably contained because, in addition to barrier performance due to high cohesiveness of a urethane bond itself, a polar group interacts with the inorganic thin film layer and also has flexibility due to the presence of its amorphous portion, so that damage to the inorganic thin film layer can be suppressed even when a flexing load is applied. Furthermore, the urethane resin has properties of swelling and solubility in an alcohol-based solvent based on its solubility parameter, and thus the laminated film can be easily peeled off from the laminated body using an alcohol-based solvent which is an inexpensive organic solvent having a relatively small environmental load. Each of the peeled films becomes a single material, and thus can be recycled.

The surface free energy of the protective layer in the present invention is preferably 45 to 60 mN/m. The surface free energy is more preferably 46 to 59 mN/m, and still more preferably 47 to 58 mN/m or more. The surface free energy is set within the above range, which makes it possible to simultaneously achieve good gas barrier properties and adhesiveness before and after a wet heat treatment such as boiling, and performance that the protective layer easily swells and is likely to be peeled off by immersion in alcohol. If the surface free energy is 45 mN/m or less, the protective layer is hydrophobic, and thus the protective layer has improved wet heat resistance, but poor alcohol swellability. Meanwhile, if the surface free energy is 60 mN/m or more, the protective layer has excellent alcohol swellability, but may have deteriorated wet heat resistance.

(Urethane Resin)

A urethane resin containing an aromatic or aromatic-aliphatic diisocyanate component as a main constituent component is more preferably used as the urethane resin from the viewpoint of improving the gas barrier properties thereof. Among them, it is particularly preferable that the urethane resin contains a tolylene diisocyanate or a metaxylylene diisocyanate component. The use of the resin allows an effect of stacking between its aromatic rings to further increase the cohesive force of the urethane bonds. Consequently, good gas barrier properties are obtained. The cohesive force of the urethane bonds is composed of hydrogen bonds. If the hydrogen bonds are exposed to an alcohol-based solvent having high permeability, the hydrogen bonds are dissociated, and thus the urethane resin is likely to swell. As a result, the adhesive force of the protective layer decreases, and thus the film can be easily peeled off with the protective layer as a trigger. Examples of the alcohol-based solvent include ethanol, 2-propanol, and 1-methoxy-2 propanol. These solvents have a solubility parameter SP value of 9 to 13, which is close to the SP value of a general urethane resin, i.e., about 10, and thus the urethane resin is likely to be mixed and swollen. In particular, 1-methoxy-2 propanol has an SP value of about 10, which is almost equivalent to that of urethane, and is suitable.

In the present invention, the proportion of the aromatic or aromatic-aliphatic diisocyanate in the urethane resin is preferably set to 50 mol% or more (50 to 100 mol%) in 100 mol% of the isocyanate component. The total proportion of the aromatic or aromatic-aliphatic diisocyanate is preferably 60 to 100 mol%, more preferably 70 to 100 mol%, and still more preferably 80 to 100 mol%. If the total proportion of the aromatic or aromatic-aliphatic diisocyanate is less than 50 mol%, good gas barrier properties may not be obtained.

The glass transition temperature (Tg) of the urethane resin used in the present invention is preferably 10°C or higher, more preferably 20°C or higher, and still more preferably 30°C or higher from the viewpoint of improvement in the barrier properties due to the cohesive force. In order to enhance the adhesive force and the swellability to the alcohol-based solvent, the glass transition temperature (Tg) is preferably 140°C or lower, more preferably 130°C or lower, and still more preferably 120°C or lower. If the Tg is out of the above range, both the cohesive force and the flexibility/swellability cannot be achieved, and the barrier properties or the adhesion may be poor. Furthermore, easy peeling due to immersion in the alcoholic

solvent is not also obtained.

In the present invention, the adhesion amount of the protective layer is preferably 0.10 to 0.40 (g/m$^2$). This makes it possible to uniformly control the protective layer in coating, resulting in a film having less coating unevenness and defects. The cohesive force of the protective layer itself is improved, and the adhesion between the inorganic thin film layer and the protective layer is also firm. The adhesion amount of the protective layer is preferably 0.13 (g/m$^2$) or more, more preferably 0.16 (g/m$^2$) or more, and still more preferably 0.19 (g/m$^2$) or more, and preferably 0.37 (g/m$^2$) or less, more preferably 0.34 (g/m$^2$) or less, and still more preferably 0.31 (g/m$^2$) or less. If the adhesion amount of the protective layer exceeds 0.400 (g/m$^2$), the gas barrier properties are improved, but the cohesive force inside the protective layer is insufficient, and the uniformity of the protective layer is also deteriorated, whereby unevenness and defects may occur in the coating appearance, or the gas barrier properties and the adhesiveness may not be sufficiently exhibited. Meanwhile, if the film thickness of the protective layer is less than 0.10 (g/m$^2$), sufficient gas barrier properties and interlayer adhesion may not be obtained.

The coating method of the resin composition for a protective layer is not particularly limited as long as it is a method of coating the film surface to form a layer. For example, normal coating methods such as gravure coating, reverse roll coating, wire bar coating, and die coating can be employed.

When the protective layer is formed, it is preferable to apply the resin composition for a protective layer and then heat and dry the resin composition, and the drying temperature at that time is preferably 110 to 190°C, more preferably 130 to 185°C, and still more preferably 150 to 180°C. If the drying temperature is lower than 110°C, insufficient drying may occur in the protective layer, or the formation of the protective layer does not proceed, whereby a cohesive force and water-resistant adhesiveness may be deteriorated, resulting in deterioration in barrier properties and hand tearability. Meanwhile, if the drying temperature exceeds 190°C, heat is excessively applied to the film, whereby the film may become brittle to cause a decreased puncture strength, or the film may shrink to cause deteriorated processability. In particular, by drying at 150°C or higher, and preferably 160°C or higher, the formation of the protective layer effectively proceeds, which provides a further increased adhesion area between the resin of the protective layer and the inorganic thin film layer, so that the water-resistant adhesiveness can be improved. If the solvent in the protective film is first volatilized under relatively low temperature conditions of 90°C to 110°C immediately after coating, and the protective film is then dried at 150°C or higher, a uniform film can be obtained, which is particularly preferable. In addition to drying, it is also more effective to perform additional heat treatment in a low temperature range as much as possible in order to advance the formation of the protective layer.

[Packaging Material]

In the laminated body of the present invention, it is necessary to use a heat-sealable resin layer called a sealant layer. The heat sealable resin layer is usually provided on the inorganic thin film layer, but may be provided on the outer side of the substrate film layer (the surface opposite to the surface on which the coating layer is formed). The heat sealable resin layer is usually formed by an extrusion lamination method or a dry lamination method. The thermoplastic polymer forming the heat sealable resin layer may be any thermoplastic polymer as long as it can sufficiently exhibit sealant adhesiveness, and polyethylene resins such as HDPE, LDPE, and LLDPE, polypropylene resins, ethylene-vinyl acetate copolymers, ethylene-$\alpha$-olefin random copolymers, and ionomer resins and the like can be used. Among them, LLDPE or a polypropylene resin that has high versatility is particularly preferable from the viewpoint of durability, seal strength, and price and the like. The thickness of the sealant layer is preferably 20 to 100 $\mu$m, more preferably 30 to 90 $\mu$m, and more preferably 40 to 80 $\mu$m. If the thickness is less than 20 $\mu$m, sufficient sealing strength cannot be obtained, and the laminated body has no tough feeling, which may cause difficult handling. Meanwhile, if the thickness exceeds 100 $\mu$m, the laminated body has high tough feeling, has deteriorated handleability as a bag, and may be expensive.

[Adhesive Layer]

For the adhesive layer used in the present invention, a general-purpose adhesive for lamination can be used.

For example, it is possible to use solvent (free) type, aqueous type, and hot melt type adhesives containing poly(ester) urethane-based, polyester-based, polyamide-based, epoxy-based, poly(meth)acrylic-based, polyethyleneimine-based, ethylene-(meth)acrylic acid-based, polyvinyl acetate-based, (modified) polyolefin-based, polybutadiene-based, wax-based, and casein-based materials and the like as a main component. Among them, a urethane-based or polyester-based material is preferable in consideration of moist heat resistance that can withstand retorting and flexibility that can follow the dimensional changes of each substrate. As a method for laminating the adhesive layer, for example, the adhesive layer can be coated by a direct gravure coating method, a reverse gravure coating method, a kiss coating method, a die coating method, a roll coating method, a dip coating method, a knife coating method, a spray coating method, a fountain coating method, and other methods. The coated amount after drying is preferably 1 to 8 $g/m^2$ in order to exhibit sufficient adhesiveness after the wet heat treatment. The coated amount is more preferably 2 to 7 $g/m^2$, and still more preferably 3 to 6 $g/m^2$. If the coated amount is less than 1 $g/m^2$, it is difficult to bond the film on the entire surface, whereby the adhesive force decreases. If the coated amount is more than 8 $g/m^2$ or more, it takes time to completely cure the film, and unreacted substances are apt to remain, whereby the adhesive force decreases.

Furthermore, in the laminated film of the present invention, at least one or more printed layers and other plastic substrates and/or paper substrates may be laminated between the inorganic thin film layer or the substrate film layer and the heat sealable resin layer, or on the outer side thereof.

As a printing ink for forming the printed layer, an aqueous or solvent-based resin-containing printing ink can be preferably used. Herein, examples of a resin used in the printing ink include an acrylic resin, a urethane-based resin, a polyester-based resin, a vinyl chloride-based resin, a vinyl acetate copolymer resin, and mixtures thereof. The printing ink may contain known additives such as an anti-static agent, a light blocking agent, an ultraviolet absorber, a plasticizer, a lubricant, a filler, a coloring agent, a stabilizer, a lubricant, an antifoaming agent, a cross-linking agent, an anti-blocking agent, and an antioxidant. The printing method of forming the printed layer is not particularly limited, and known methods such as an offset printing method, a gravure printing method, and a screen printing method may be used. For drying the solvent after printing, known drying methods such as hot wind drying, hot roll drying, and infrared drying may be used.

The laminated body of the present invention is preferably an oxygen transmission rate of 20 $ml/m^2 \cdot d \cdot MPa$ or less under conditions of 23°C and 65% RH before and after boiling at 90°C for 30 minutes from the viewpoint of exhibiting good gas barrier properties. Furthermore, by controlling composition and adhesion amount of the inorganic thin film layer, the oxygen transmission rate can be set to preferably 15 $ml/m^2 \cdot d \cdot MPa$ or less, and more preferably 10 $ml/m^2 \cdot d \cdot MPa$ or less. The oxygen transmission rate exceeding 20 $ml/m^2 \cdot d \cdot MPa$ makes it difficult to cope with applications requiring high gas barrier properties. Meanwhile, if the oxygen transmission rate before and after retorting is less than 1 $ml/m^2 \cdot d \cdot MPa$ in any case, the barrier performance is excellent, but a residual solvent is less likely to outwardly permeate the bag, whereby the amount of the residual solvent transferred to the contents may relatively increase, which is not preferable. The lower limit of the oxygen transmission rate is preferably 1 $ml/m^2 \cdot d \cdot MPa$ or more.

The laminated body of the present invention preferably has a wet lamination strength of 1.5 N/15 mm or more, more preferably 1.8 N/15 mm or more, and still more preferably 2.0 N/15 mm or more under conditions of 23°C and 65% RH before and after boiling at 90°C for 30 minutes. If the lamination strength is less than 1.5 N/15 mm, peeling occurs due to a flexing load or liquid contents, whereby the barrier properties may be deteriorated, or the contents may leak. Furthermore, hand tearability may be deteriorated.

The lamination strength of the laminated body of the present invention after being immersed in 1-methoxy-2-propanol as an alcoholic solvent at 40°C for 72 hours is preferably 1.0 N/15 mm or less, more preferably 0.9 N/15 mm or less, and still more preferably 0.8 N/15 mm or less. If the lamination strength exceeds 1.0 N/15 mm, it is difficult to easily peel the laminated film from the laminated body, which causes a concern that the laminated body has poor recyclability. By increasing the temperature at the time of immersion or lengthening the time, further reduction in the lamination strength can be expected, which can provide easier peeling.

In the present invention, a temperature when the laminated body is immersed in the solvent is preferably 10 to 60°C, more preferably 15 to 55°C, and still more preferably 20 to 50°C. If the temperature is lower than 10°C, the solvent is less likely to be immersed in the laminated body, which may be unable to provide easy peeling. Meanwhile, if the temperature is higher than 60°C, volatilization of 1-methoxy-2-propanol is promoted, and thus the immersion liquid may be reduced, which is not preferable from the viewpoint of economy and safety.

A humidity when the laminated body is immersed in the solvent in the present invention is not particularly limited, but is preferably 10 to 80% RH, more preferably 15 to 75% RH, and still more preferably 20 to 70% RH as a general environment. In order to create a humidity environment of less than 10% RH or more than 80% RH, humidity conditioning equipment is required, and thus management and processing costs may increase.

A solvent immersion time in the present invention is preferably 12 to 72 hours. The time is more preferably 24 to 60 hours, and still more preferably 36 to 48 hours. If the immersion time is less than 12 hours, the solvent does not sufficiently permeate the laminated body, and thus the laminated film may be unable to be easily peeled off. Meanwhile, if the immersion time exceeds 72 hours, a treatment time becomes too long, and thus the method may be said to be ineffective in terms of efficiency.

In the laminated body of the present invention, the ratio of the recycled PET resin to the total weight of the laminated body (referred to as a recycle ratio) is preferably 3% or more. The recycle ratio is more preferably 5% or more, and still more preferably 10% or more. If the recycle ratio is less than 3%, the recycled resin use rate is low, and thus there is a possibility that the film cannot be said to have a low environmental load.

The laminated body of the present invention makes it possible to provide a film which is excellent in barrier properties and adhesiveness even after a severe wet heat treatment while using a recycled material, and which can easily separate a laminated film from the laminated body and is excellent in recyclability.

EXAMPLES

Hereinafter, the present invention will be described in more detail by way of Examples, but is not limited to the examples described below. Evaluations of the film were performed by the following measurement methods.

(1) Intrinsic Viscosity (IV) of Raw Material Resin and Resin Constituting Film

A sample was vacuum-dried at 130°C all day and all night, and then pulverized or cut. 80 mg of the obtained sample was accurately weighed, and heat-dissolved at 80°C for 30 minutes in a mixed solution of phenol/tetrachloroethane = 60/40 (volume ratio). The mixture was heat-dissolved at 80°C, and then cooled to normal temperature. The mixed solvent prepared at the above ratio was added in a measuring flask to adjust the total volume to 20 ml, followed by performing measurement at 30°C (unit: dl/g). An Ostwald viscometer was used to measure the intrinsic viscosity.

(2) Content Rate of Terephthalic Acid and Isophthalic Acid Components Contained in Raw Material Polyester and Polyester Constituting Film

A sample solution was prepared by dissolving a raw material polyester resin or a polyester film in a solvent in which chloroform D (manufactured by Yurisoppu Co., Ltd.) and trifluoroacetic acid D1 (manufactured by Yurisoppu Co., Ltd.) were mixed at 10 : 1 (volume ratio). Then, NMR of protons in the prepared sample solution was measured using an NMR apparatus (nuclear magnetic resonance analyzer: GEMINI-200 manufactured by Varian) under the measurement conditions of a temperature of 23°C and an integration number of 64. In the NMR measurement, the peak intensity of predetermined protons was calculated, and the content rates (mol%) of the terephthalic acid component and the isophthalic acid component in 100 mol% of acid components were calculated.

(3) Thicknesses of Substrate Film

The thicknesses of films were measured in accordance with JIS K7130-1999 A method using a dial gauge.

(4) Composition and Film Thickness of Inorganic Thin Film Layer

For laminated films (after lamination of thin films) obtained in Examples and Comparative Examples, a film thickness composition was measured by a calibration curve prepared in advance using an X-ray fluorescence analyzer ("ZSX100e" manufactured by Rigaku Corporation). The conditions of an excited X-ray tube were 50 kV and 70 mA.

(5) Adhesion Amount of Protective Layer

In each of Examples and Comparative Examples, each laminated film obtained at the stage of laminating a protective layer on a substrate film was used as a sample. A test piece of 100 mm × 100 mm was cut out from this sample. A protective layer was wiped with dimethylformamide. From a change in the mass of the film before and after wiping, the adhesion amount of the protective layer was calculated.

(6) Surface free energy of protective layer

Water and methylene iodide were deposited on the laminated films obtained in Examples and Comparative Examples with a contact angle meter (model: CAM200, distributor firm: Altech ALT Co., Ltd., manufacturer: KSV Instruments in Filand), and the contact angles thereof were measured. The values of the contact angles were read after 5 seconds from the deposition of the water. As an analysis software, FAMAS (Kyowa Interface Science Co., Ltd.) was used. Detailed conditions of measurement and analysis are shown below.

Temperature and humidity: 23°C, 65%

Measurement method: liquid drop method (0/2 method)
Droplet size: 5.0 μL (water), 1.5 μL (methylene iodide)
Needle thickness: 22 G, inner diameter: 0.4 mm

Next, using the obtained value of the contact angle θ, surface free energy was calculated by the Owens-Wendt method.

First, it is assumed that the following equation is established at an AB interface assuming that surface free energy $\gamma_i$ includes a nonpolar dispersion force component $\gamma^d$, and a polar hydrogen bonding component $\gamma^h$.

$$\gamma_i = \gamma_i{}^d + \gamma_i{}^h$$

Next, it is assumed that the following equation of an extended Fowkes model (the contribution of interfacial tension that decreases is expressed by the dispersion force of an intermolecular force and the contribution of a polar force) is established for interfacial tension $\gamma_{AB}$ between A and B.

$$\gamma_{AB} = \gamma_A + \gamma_B - 2(\gamma_A{}^d\gamma_B{}^d)^{1/2} - 2(\gamma_A{}^h\gamma_B{}^h)^{1/2}$$

In this regard, in a case of a liquid L and a solid S, upon combination of the equation with a Young's equation, the following equation is established.

$$\gamma_L(1 + \cos\theta) = 2(\gamma_A{}^d\gamma_B{}^d)^{1/2} + 2(\gamma_A{}^h\gamma_B{}^h)^{1/2}$$

The surface free energies of the solids are calculated by measuring θ with liquids (water and methylene iodide) having known component values of surface free energies and solving simultaneous equations therewith.

[Production of laminated body a]

A polyurethane-based adhesive (TM569 manufactured by Toyo-Morton, Ltd.) was applied to the protective layer surface of each of the laminated films obtained in Examples and Comparative Examples so that the thickness after drying at 80°C was 3 μm. A linear low-density polyethylene film (L4102 manufactured by TOYOBO CO., LTD.; thickness: 40 μm; referred to as LL) was then dry-laminated thereon on a metal roll heated to 60°C, and subjected to aging at 40°C for 4 days, thereby obtaining a gas barrier laminated body for evaluation (hereinafter, also referred to as "laminated body a").

[Production of laminated body b]

A polyurethane-based adhesive (TM569 manufactured by Toyo-Morton, Ltd.) was applied to the protective layer surface of each of the laminated films obtained in Examples and Comparative Examples so that the thickness after drying at 80°C was 3 μm. A cast polypropylene film (P1176 manufactured by TOYOBO CO., LTD.; thickness: 70 μm; referred to as CPP) was then dry-laminated thereon on a metal roll heated to 60°C, and subjected to aging at 40°C for 4 days, thereby obtaining a gas barrier laminated body for evaluation (hereinafter, also referred to as "laminated body b").

(7) Method for Evaluating Oxygen Transmission Rate

The normal oxygen transmission rate of the laminated body produced in the above [Production of Laminated Bodies] was measured in an atmosphere of a temperature of 23°C and a humidity of 65% RH using an oxygen transmission rate measurement apparatus ("OX-TRAN (registered trademark) 1/50" manufactured by MOCON) in accordance with JIS-K7126 B method. The oxygen transmission rate was measured in a direction in which oxygen permeated from the substrate film side to the heat sealable resin layer side of the laminated body.

Meanwhile, the laminated body produced in the above [Production of Laminated Bodies] was subjected to a wet heat treatment in which the laminated body was held in hot water at 90°C for 30 minutes, and dried at 40°C for 1 day (24 hours). The oxygen transmission rate (after boiling) of the obtained laminated body after the wet heat treatment was measured in the same manner as described above.

(8) Method for Evaluating Lamination Strength before or after boiling

The laminated body produced above was cut into a test piece having a width of 15 mm and a length of 200 mm, and a lamination strength (before treatment) was measured using a Tensilon universal material testing machine ("Tensilon UMT-II-500 type" manufactured by Toyo Baldwin Co., Ltd.) under the conditions of a temperature of 23°C and a relative humidity of 65%. In the measurement of a lamination strength, a tensile speed was set to 200 mm/min, and a strength was measured between the laminated film layer and the heat sealable resin layer of each of the laminated films obtained in Examples and Comparative Examples, and peeling was performed at a peeling angle of 90 degrees.
Meanwhile, the laminated body produced as described above was subjected to boiling for 30 minutes in which the laminated body was held in pressurized hot water at a temperature of 90°C. Immediately thereafter, a test piece was cut out from the obtained laminated body after retorting in the same manner as described above, and a lamination strength (after boiling) was measured in the same manner as described above.

(9) Method for evaluating lamination strength after immersion in 1-methoxy-2-propanol

The laminated body prepared above was immersed in 1-methoxy-2-propanol (Wako Pharmaceutical Co., Ltd.) under an environment of 23°C × 65% RH or 40°C × 15% RH for 24 hours or 48 hours. Then, immediately, a test piece was cut out from the obtained laminated body in the same manner as described above, and lamination strength (after immersion) was measured in the same manner as described above.

(10) Evaluation of easy peelability after immersion in 1-methoxy-2-propanol

When the laminated body immersed under the conditions of the above (9) was peeled off, a sample in which the laminated film and the sealant could be easily peeled off by hand was evaluated as good, and a sample in which the laminated film and the sealant could not be peeled off was evaluated as poor.

(11) Calculation of recycling ratio

With respect to the laminated body produced above, the specific gravity of the polyester laminated film was set to 1.4, the specific gravity of the sealant linear low density polyethylene film was set to 0.92, the specific gravity of the cast polypropylene film was set to 0.91, and the amount of the recycled PET resin used relative to the total weight of the laminated body was calculated in % by weight.
Hereinafter, coating liquids used in the present Examples and Comparative Examples will be described in detail. The coating liquids were used in Examples 1 to 11 and Comparative Example 1 to 4, and shown in Table 1.

[Carbodiimide-Based Cross-Linking Agent (A)]

As a carbodiimide-based cross-linking agent, commercially available "Carbodilite (registered trademark) SV-02" manufactured by Nisshinbo Chemical Inc.; solid content: 40%) was prepared.

[Oxazoline Group-Containing Resin (B)]

As an oxazoline group-containing resin, commercially available water-soluble oxazoline-group-containing acrylate ("EPOCROS (registered trademark) WS-300" manufactured by Nippon Shokubai Co., Ltd.; solid content: 10%) was prepared. The oxazoline group amount in this resin was 7.7 mmol/g.

[Acrylic Resin (C)]

As an acrylic resin, a commercially available acrylic ester copolymer emulsion having a concentration of 25% by mass ("Movinyl (registered trademark) 7980" manufactured by Nichigo-Movinyl Co. Ltd.) was prepared.

[Urethane Resin (D)]

As a urethane resin, a commercially available polyester urethane resin dispersion ("Takelac (registered trademark) W605" manufactured by Mitsui Chemicals, Inc., solid content: 30%) was prepared. A glass transition temperature (Tg) of 100°C, which was measured by DSC. The proportion of its aromatic or aromatic-aliphatic diisocyanates was 55 mol% of the whole of its isocyanate components, the proportion being measured by 1H-NMR.

[Silane Coupling Agent (E)]

As a silane coupling agent, commercially available "KBM903 (registered trademark)" manufactured by Shin-Etsu Chemical Co., Ltd., solid content 100%) was prepared. In use, the silane coupling agent was diluted with water to obtain a 2% aqueous solution.

[Urethane Resin (F)]

As a urethane resin, a commercially available polyester urethane resin dispersion ("Takelac (registered trademark) WPB341" manufactured by Mitsui Chemicals, Inc., solid content: 30%) was prepared. A glass transition temperature (Tg) of 130°C, which was measured by DSC. The proportion of its aromatic or aromatic-aliphatic diisocyanates was 85 mol% of the whole of its isocyanate components, the proportion being measured by 1H-NMR.

[Urethane Resin (G)]

As a urethane resin, a commercially available polyester urethane resin dispersion ("AP201" manufactured by DIC Corporation, solid content: 23%) was prepared. A glass transition temperature (Tg) of 10°C, which was measured by DSC. The proportion of its aromatic or aromatic-aliphatic diisocyanates was 100 mol% of the whole of its isocyanate components, the proportion being measured by 1H-NMR.

[Gas Barrier Vinyl Alcohol-Based Resin (H)]

As a vinyl alcohol-based resin having gas barrier properties, a commercially available water-soluble vinyl alcohol resin ("Nichigo G-Polymer (registered trademark) OKS-8049" manufactured by The Nippon Synthetic Chemical Industry Co., Ltd.; powder) was dissolved in water to prepare an aqueous solution having a solid content of 5%.

[Gas barrier protective layer solution (coating liquid 6)]

A solution obtained by hydrolyzing tetraethoxysilane with 0.02 mol/L of hydrochloric acid was added into a 5%-by-weight aqueous solution of a polyvinyl alcohol resin (PVA) having a saponification degree of 99% and a polymerization degree of 2400 so as to attain a proportion of $SiO_2$/PVA = 60/40 in a weight ratio, thereby obtaining a gas barrier protective layer solution (coating liquid 6).

[Coating Liquid 1 used for Coating Layer]

Materials were mixed at the following blending ratio to prepare a coating liquid (resin composition for coating layer).

| | |
|---|---|
| Water | 54.40% by mass |
| Isopropanol | 25.00% by mass |
| Oxazoline group-containing resin (A) | 15.00% by mass |
| Acrylic resin (B) | 3.60% by mass |
| Urethane resin (C) | 2.00% by mass |

[Coating Liquid 2 used for Coating Layer]

Materials were mixed at the following blending ratio to prepare a coating liquid (resin composition for coating layer).

| | |
|---|---|
| Water | 57.80% by mass |
| Isopropanol | 25.00% by mass |
| Carbodiimide-based cross-linking agent (A) | 2.10% by mass |
| Urethane resin (F) | 8.00% by mass |
| Silane coupling agent (E) | 7.10% by mass |

[Coating Liquid 3 used for Coating of Protective Layer]

A coating liquid 3 was prepared by mixing the following coating agents.

| | |
|---|---|
| Water | 30.00% by mass |
| Isopropanol | 30.00% by mass |
| Urethane resin (F) | 40.00% by mass |

[Coating Liquid 4 used for Coating of Protective Layer]

A coating liquid 4 was prepared by mixing the following coating agents.

| | |
|---|---|
| Water | 17.83% by mass |
| Isopropanol | 30.00% by mass |
| Urethane resin (G) | 52.17% by mass |

[Coating Liquid 5 used for Coating of Protective Layer]

A coating liquid 5 was prepared by mixing the following coating agents.

| | |
|---|---|
| Water | 20.00% by mass |
| Isopropanol | 10.00% by mass |
| Gas Barrier Vinyl Alcohol-Based Resin (H) | 70.00% by mass |

[Coating Liquid 7 used for Coating of Protective Layer]

A coating liquid 7 was prepared by mixing the following coating agents.

| | |
|---|---|
| Water | 30.00% by mass |
| Isopropanol | 30.00% by mass |
| Urethane resin (D) | 40.00% by mass |

[Coating Liquid 8 used for Coating of Protective Layer]

A coating liquid 8 was prepared by mixing the following coating agents.

| | |
|---|---|
| Water | 22.00% by mass |
| Isopropanol | 30.00% by mass |
| Acrylic resin (C) | 48.00% by mass |

Hereinafter, a method for producing a laminated film used in each of Examples and Comparative Examples will be described. The laminated films were used in Examples 1 to 11 and Comparative Example 1 to 4, and shown in Table 1.

(Preparation of Polyester Resin Recycled from PET Bottles)

A recycled polyester raw material was obtained by washing PET bottles for beverages to remove foreign matters such as remaining beverage, thereafter melting flakes obtained by pulverizing the PET bottles by an extruder, further changing the filter with a filter having a smaller mesh size, then separating the fine foreign matters by filtration twice, and then separating the fine foreign matters by third filtration using a filter with the smallest mesh size of 50 μm. The obtained resin had a composition of terephthalic acid/isophthalic acid//ethylene glycol = 97.0/3.0//100 (mol%), and the intrinsic viscosity of the resin was 0.70 dl/g. This resin was defined as a polyester A.

(Production of Substrate Film)

A substrate film was produced using a polyethylene terephthalate resin made of terephthalic acid//ethylene glycol = 100//100 (mol%) as a polyester B and having an intrinsic viscosity of 0.62 dl/g, and a master batch containing, as a polyester C, the polyester B and 0.3% of amorphous silica having an average particle diameter of 1.5 $\mu$m. The respective raw materials were dried at 125°C under reduced pressure of 33 Pa for 8 hours. A mixture obtained by mixing these raw materials so that A/B/C became 70/20/10 (weight ratio) was charged into a single screw extruder. The resin temperature was set to 280°C from the extruder to a melt line, a filter, and a T-die. The resin temperature was set to 305°C for 30 seconds from the starting point of a compression part of a screw of the extruder, and thereafter to 280°C again.

The melt extruded out of the T-die was brought into close contact with a cooling roll to obtain an un-stretched sheet. Then, the un-stretched sheet was stretched (MD1) 1.41 times in the machine direction with rolls heated to 118°C and having different circumferential speeds, and further stretched (MD2) 2.92 times in the machine direction with rolls heated to 128°C and having different circumferential speeds. The vertically stretched sheet was introduced to a tenter, and one surface of the film was coated with the coating liquid 1 by a fountain bar coating method. The sheet was introduced to the tenter while being dried, preheated at 121°C, and thereafter transversely stretched 4.3 times at 131°C. Then, for heat setting, the sheet was subjected to a treatment at 180°C without relaxation (0%) for 2.5 seconds (TS1), thereafter to a treatment at 231°C with 5% of relaxation for 3.0 seconds (TS2), and further to a treatment at 222°C without relaxation for 2.5 seconds (TS3). Then, the sheet was cooled in the same tenter at 120°C for 6.0 seconds, and finally wound with a winder to obtain a biaxially stretched polyester film having a thickness of 12 $\mu$m.

Laminated films were similarly produced and evaluated except that the blending amounts of the resins A, B, and C or the coating liquids of the coating layer and the protective layer as shown in Table 1 were changed in preparing the substrate film layers described in Examples and Comparative Examples.

Hereinafter, a method for producing an inorganic thin film layer used in each of Examples and Comparative Examples will be described. The inorganic thin film layers were used in Examples 1 to 11 and Comparative Examples 1 to 4, and shown in Table 1.

(Formation of Inorganic Thin Film Layer M-1)

As an inorganic thin film layer M-1, aluminum oxide was vapor-deposited on the substrate film layer. In the method of vapor-depositing aluminum oxide on the substrate film layer, a film is set on the unwinding side of a continuous type vacuum vapor-deposition apparatus, caused to travel via a cooling metal drum, and wound. At this time, the pressure of the continuous type vacuum vapor-deposition apparatus was reduced to 10-4 Torr or less. Metal aluminum having a purity of 99.99% was loaded in a crucible made of alumina from the lower portion of the cooling drum. The metal aluminum was heated and evaporated. While oxygen was supplied into the vapor to perform an oxidization reaction, aluminum oxide was deposited onto the film to form an aluminum oxide film having a thickness of 10 nm.

<Formation of Inorganic Thin Film Layer M-2>

As an inorganic thin film layer M-2, a composite oxide layer of silicon dioxide and aluminum oxide was formed on a substrate film layer by an electron beam vapor-deposition method. Particulate $SiO_2$ (purity: 99.9 %) and $Al_2O_3$ (purity: 99.9%) having a size of about 3 mm to 5 mm were used as a vapor-deposition source. The film thickness of the inorganic thin film layer ($SiO_2/Al_2O_3$ composite oxide layer) in the film (inorganic thin film layer/coating layer-containing film) obtained as described above was 13 nm. The composition of the composite oxide layer was $SiO_2/Al_2O_3$ (mass ratio) = 60/40.

Coating of Coating Liquid on Vapor-Deposited Film (Lamination of Protective Layer)

The coating liquid prepared above was applied onto the inorganic thin film layer of the obtained vapor-deposited film by a gravure roll coating method, preliminarily dried at 110°C, and then sufficiently dried at 180°C to obtain a protective layer. The coating amount after drying was 0.30 g/m$^2$ (Dry). Thereafter, a post-heat treatment was performed at 40°C for 2 days. The coating liquid comprising the protective layer was changed as shown in Table 1 of each of the examples and comparative examples.

As described above, laminated films including (the coating layer), the inorganic thin film layer, and the protective layer on the substrate film was produced. The laminated bodies were produced from the obtained laminated films were subjected to evaluations. The results are shown in Table 1.

[Table 1]

| | Substrate film | | Coating layer | | Inorganic thin film layer | | Protective layer | | Evaluation item | | | | | | | | | |
| | Content rate of resin recycled from PET bottle [wt%] | Thickness [μm] | Type | Adhesion amount [g/m²] | Type | Thickness [nm] | Type | Adhesion amount [g/m²] | Laminated body | Laminated film alone | Laminated body A | | | | | | Easy peelability | Recycling ratio [wt%] |
| | | | | | | | | | | Surface free energy [mN/m] | Oxygen Transmission Rate [ml/m²·day·MPa] | | Lamination Strength [N/15mm] | | | | | |
| | | | | | | | | | | | Before treatment | after boiling | Before treatment | after boiling | After immersion in solution | | | |
| | | | | | | | | | | | | | | | Temperature [°C] × Time [h] | Value | | |
| Example 1 | 10 | 12 | - | - | M-2 | 13 | Coating liquid 9 | 0.30 | a | 50 | 10 | 16 | 7.4 | 6.4 | 40°C×48h | 0.6 | Good | 3 |
| Example 2 | 50 | 12 | - | - | M-2 | 13 | Coating liquid 9 | 0.30 | a | 50 | 8 | 14 | 6.8 | 6.8 | 40°C×48h | 0.7 | Good | 16 |
| Example 3 | 70 | 12 | - | - | M-2 | 13 | Coating liquid 9 | 0.30 | a | 50 | 9 | 15 | 7.6 | 6.9 | 40°C×48h | 0.6 | Good | 22 |
| Example 4 | 80 | 12 | - | - | M-2 | 13 | Coating liquid 3 | 0.30 | a | 56 | 5 | 6 | 3.2 | 2.8 | 40°C×48h | 0.3 | Good | 25 |
| Example 5 | 80 | 12 | - | - | M-2 | 13 | Coating liquid 7 | 0.30 | a | 49 | 10 | 13 | 2.7 | 3.0 | 40°C×48h | 0.2 | Good | 25 |
| Example 6 | 80 | 12 | Coating liquid 1 | 0.03 | M-2 | 13 | Coating liquid 9 | 0.30 | a | 50 | 9 | 10 | 7.0 | 6.0 | 40°C×48h | 0.6 | Good | 25 |
| Example 7 | 80 | 12 | - | - | M-1 | 10 | Coating liquid 3 | 0.30 | a | 56 | 5 | 5 | 6.5 | 4.5 | 40°C×48h | 0.5 | Good | 25 |
| Example 8 | 80 | 12 | Coating liquid 2 | 0.04 | M-2 | 13 | Coating liquid 9 | 0.30 | b | 50 | 8 | 8 | 4.0 | 6.2 | 40°C×48h | 0.5 | Good | 25 |
| Example 9 | 80 | 12 | - | - | M-2 | 13 | Coating liquid 4 | 0.30 | a | 50 | 9 | 12 | 8.0 | 7.2 | 40°C×48h | 0.5 | Good | 17 |
| Example 10 | 80 | 12 | - | - | M-2 | 13 | coating liquid 4 | 0.30 | a | 50 | 9 | 12 | 8.0 | 7.2 | 23°C×48h | 0.6 | Good | 17 |

(continued)

| | Substrate film | | Coating layer | | Inorganic thin film layer | | Protective layer | | Laminated body | Evaluation item | | | | | | | | | Easy peelability | Recycling ratio [wt%] |
|---|---|---|---|---|---|---|---|---|---|---|---|---|---|---|---|---|---|---|---|---|
| | | | | | | | | | | Laminated film alone | Laminated body A | | | | | | | | | |
| | | | | | | | | | | | Oxygen Transmission Rate | | Lamination Strength | | | | | | | |
| | | | | | | | | | | | [ml/m² • day • MPa] | | [N/15mm] | | | | | | | |
| | Content rate of resin recycled from PET bottle [wt%] | Thickness [μm] | Type | Adhesion amount [g/m²] | Type | Thickness [nm] | Type | Adhesion amount [g/m²] | | Surface free energy [mN/m] | Before treatment | after boiling | Before treatment | after boiling | After immersion in solution | | | |
| | | | | | | | | | | | | | | | Temperature [°C] × Time [h] | Value | | |
| Example 11 | 80 | 12 | - | - | M-2 | 13 | Coating liquid 4 | 0.30 | a | 5 0 | 9 | 12 | 8.0 | 7.2 | 23°C×24h | 0.8 | Good | 17 |
| Comparative Example 1 | 0 | 12 | - | - | M-2 | 10 | Coating liquid 5 | 0.30 | a | 56 | 1 | 7 | 2.0 | 0.0 | 40°C×48h | 1.8 | Poor | 0 |
| Comparative Example 2 | 0 | 12 | - | - | M-1 | 10 | Coating liquid 6 | 0.30 | a | 6 0 | 1 | 2 | 9.7 | 6.3 | 40°C×48h | 3.0 | Poor | 0 |
| Comparative Example 3 | 80 | 12 | - | - | M-2 | 10 | Coating liquid 8 | 0.30 | a | 4 3 | 8 | 8 | 1.9 | 0.3 | 40°C×48h | 0.5 | Good | 25 |
| Comparative Example 4 | 80 | 12 | - | - | M-2 | 10 | - | - | a | 7 3 | 20 | 20 | 8.0 | 7.3 | 40°C×48h | 1.5 | Poor | 25 |

INDUSTRIAL APPLICABILITY

The present invention has found that by using a polyester resin derived from PET bottles having a low environmental load as a substrate and forming a structure including a specific barrier protective layer excellent in flexibility and adhesiveness with respect to an inorganic thin film layer, gas barrier performance before a treatment can be improved, and the barrier properties and the adhesiveness can be maintained even after a severe wet heat treatment. Furthermore, the present inventors have found that the laminated film can be easily peeled off from the laminated body by utilizing the dissolution properties of the protective layer when the laminated body is immersed in a specific solvent, and have completed the present invention. Moreover, the laminated body of the present invention provides few processing steps, and can be easily produced, and is excellent recyclable, whereby a gas barrier film excellent in both economic efficiency and production stability and having homogeneous characteristics can be provided.

**Claims**

1. A laminated body obtained by laminating a sealant layer on one surface of a laminated film including an inorganic thin film layer on one surface of a substrate film and a protective layer on the inorganic thin film layer,
   wherein the laminated body satisfies the following (a) to (d):

   (a) the substrate film contains 10% by weight or less of a polyester resin recycled from PET bottles;
   (b) the protective layer of the laminated film contains a urethane resin, and surface free energy of a surface of the protective layer is 45 to 60 mN/m;
   (c) the laminated body has lamination strength of 1.5 N/15 mm or more, and lamination strength of 1.0 N/15 mm or less after being immersed in 1-methoxy-2-propanol at 40°C for 72 hours; and
   (d) the laminated body has lamination strength of 1.5 N/15 mm or more after a boiling sterilization treatment at 90°C for 30 minutes.

2. The laminated body according to claim 1, wherein the urethane resin contained in the protective layer contains an aromatic component or an aromatic-aliphatic component as a constituent component.

3. The laminated body according to claim 1 or 2, further comprising a coating layer between the substrate film layer and the inorganic thin film layer,
   wherein the coating layer contains a resin having an oxazoline group or a carbodiimide group as a constituent component.

4. The laminated body according to any one of claims 1 to 3, wherein the inorganic thin film layer is an aluminum oxide layer or a layer of a composite oxide of silicon oxide and aluminum oxide.

## INTERNATIONAL SEARCH REPORT

| International application No. |
| --- |
| PCT/JP2021/014776 |

**A. CLASSIFICATION OF SUBJECT MATTER**
B32B 9/00(2006.01)i; B32B 27/36(2006.01)i; B32B 27/40(2006.01)i; B65D 65/40(2006.01)i
FI: B32B27/36; B32B27/40; B65D65/40 D; B32B9/00 A
According to International Patent Classification (IPC) or to both national classification and IPC

**B. FIELDS SEARCHED**

Minimum documentation searched (classification system followed by classification symbols)
B32B1/00-43/00; B65D65/40

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2014-030984 A (TOYOBO CO., LTD.) 20 February 2014 (2014-02-20) claims 1-5, paragraphs [0001], [0106]-[0144], examples 1-11 | 1-4 |
| Y | JP 2017-007175 A (TOYOBO CO., LTD.) 12 January 2017 (2017-01-12) claims 1-6, paragraphs [0001]-[0007] | 1-4 |
| Y | WO 2010/140575 A1 (TOYOBO CO., LTD.) 09 December 2010 (2010-12-09) claims 1-12, paragraphs [0001]-[0012] | 1-4 |
| A | JP 2017-177590 A (TOYOBO CO., LTD.) 05 October 2017 (2017-10-05) claims 1-5, examples 1-2 | 1-4 |
| A | WO 2019/187694 A1 (TOYOBO CO., LTD.) 03 October 2019 (2019-10-03) claims 1-5, example 2 | 1-4 |
| A | JP 2009-018533 A (TORAY INDUSTRIES, INC.) 29 January 2009 (2009-01-29) claims 1-7, examples 1-2 | 1-4 |

☐ Further documents are listed in the continuation of Box C.     ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>18 June 2021 (18.06.2021) | Date of mailing of the international search report<br>29 June 2021 (29.06.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT
Information on patent family members

International application no.

PCT/JP2021/014776

| Patent Documents referred in the Report | Publication Date | Patent Family | Publication Date |
|---|---|---|---|
| JP 2014-030984 A | 20 Feb. 2014 | (Family: none) | |
| JP 2017-007175 A | 12 Jan. 2017 | (Family: none) | |
| WO 2010/140575 A1 | 09 Dec. 2010 | US 2012/0088112 A1 claims, paragraphs [0001]-[0013] EP 2439229 A1 CN 102482437 A KR 10-2012-0036895 A | |
| JP 2017-177590 A | 05 Oct. 2017 | (Family: none) | |
| WO 2019/187694 A1 | 03 Oct. 2019 | (Family: none) | |
| JP 2009-018533 A | 29 Jan. 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012091862 A
- JP 6500629 B
- JP 5560708 B
- JP 4524463 B
- WO 2019187970 A